# EUROPEAN PATENT APPLICATION

(11) **EP 1 835 135 A1**
(43) Date of publication of application: **19.09.2007**
(21) Application number: 06255092.6
(22) Date of filing: 02.10.2006
(51) Int. Cl.: F01L 1/34, G01P 3/44, G01D 5/245, F01L 1/02, G01B 17/00

(54) **Method for the measurement of the rotation of a valve train follower and apparatus for carrying out the method**

(71) Applicant: CASTROL LIMITED, Swindon Wiltshire SN3 1RE (GB)
(72) Inventor: Mufti, Riaz Ahmad CASTROL LIMITED Castrol Technology Centre, Reading, Berkshire, RG8 7 QR (GB)
(74) Representative: Perkins, Nicholas David

(57) **Abstract**

A method for the measurement of the rotation of a valve train follower in an internal combustion engine, said method comprising
(a) providing said valve train follower with a reference target,
(b) providing an ultrasonic sensor for measuring the distance between the sensor and the follower,
(c) monitoring the step change in the distance between the follower and the sensor as the target rotates past the sensor, and
(d) measuring the time between successive step changes to determine the rotation of said valve train follower.
Also an apparatus for apparatus for the measurement of the rotation of a valve train follower in an internal combustion engine, said apparatus comprising a valve train follower with a reference target and an ultrasonic sensor for measuring the distance between the sensor and the follower.

## Description

The present invention relates to the measurement of rotation and in particular to a method and apparatus for measurement of the rotation of a valve train follower in an internal combustion engine.

As internal combustion engines are getting more and more compact it is becoming more and more difficult for engineers and researchers to study the effect of lubricants in different parts of the engine under realistic conditions due to lack of required technology.

Lubrication is an often used and effective means of improving an engine's efficiency by reducing the friction experienced by engine components during operation. Consequently, an important aspect of research into lubrication is the ability to measure friction experienced by different engine components. However some parts of an engine are more difficult to study than others and this is found to be so for an engine's valve train.

A traditional reciprocating internal combustion engine uses valves to control air and fuel flow into and out of the cylinders facilitation combustion. Valve train is an all-encompassing term used to describe the mechanical system responsible for operation of the valves.

Valve trains may be built in several configurations each of which varies slightly in layout but still performs the task of opening and closing the valves at the time necessary for proper operation of the engine. These layouts are differentiated by the location of the camshaft within the engine for example overhead camshaft, cam-in-block or capless.

The present invention is preferably directed to engines having overhead camshafts wherein the camshaft is located above the valves within the cylinder head and operates either directly or indirectly on the valves.

The camshaft is a shaft containing many cams that convert rotary motion to reciprocating or lifting motion. Typically for every two revolutions of the crankshaft the camshaft rotates for one revolution. The lobes of the camshaft actuate the valve train in relation to the piston movement in an internal combustion engine. The camshaft determines when the valves open and close, how long they stay open and how far they stay open.

Valve train followers (tappets) are flat faced or roller companions to the camshaft that transfer the action of the camshaft to the rest of the valve train by sliding or rolling on the cam lobe. The cam/follower contributes most in the area of friction losses and wear due to the heavy loading applied instantaneously through a thin film of lubricant. One of the main parameters that effect the performance of such systems is the valve train follower rotation.

The valve train followers are designed to rotate upon the cam lobes in order to prevent wear and tear on the components of the valve train.

In a car engine, the rotation of the valve train follower depends on a number of factors including lubricants. Ideally in a running engine, the follower rotation should be uniform but if the rotation stops or becomes irregular this may lead to catastrophic consequences. Hence an understanding of the interaction of valve train follower rotation with different lubricants is important to both lubricant manufacturers and to engine manufacturers.

Further, as engines are becoming more and more compact it is becoming increasingly difficult for engineers and researchers to study the effect of lubricant in different parts of the engine under realistic conditions.

The uniform rotation of followers in an engine reduces the friction and wear of both the cam and the follower and the motor industry requires cam/follower Radio Nuclide Testing (RNT).

It would therefore be very useful to be able to have a robust technique for the measurement of valve train follower rotation in internal combustion engines, preferably having overhead camshafts. Such information may be used to understand the effects of lubricant components on friction and follower rotation in internal combustion engines.

We have now developed a method and apparatus for the measurement of the rotation of valve train followers using ultrasonic sensors whereby the follower has a target which is monitored. Ultrasonic sensors have previously been used for the measurement of various parameters in different areas of engines.

Thus, according to a first aspect of the present invention there is provided a method for the measurement of the rotation of a valve train follower in an internal combustion engine, said method comprising
(a) providing said valve train follower with a reference target,
(b) providing an ultrasonic sensor for measuring the distance between the sensor and the follower,
(c) monitoring the step change in the distance between the follower and the sensor as the target rotates past the sensor, and
(d) measuring the time between successive step changes to determine the rotation of said valve train follower.

The present invention also provides an apparatus for the measurement of the rotation of a valve train follower in an internal combustion engine, said apparatus comprising a valve train follower with a reference target and an ultrasonic sensor for measuring the distance between the sensor and the follower. The apparatus may be used in the method of the present invention.

The use of an ultrasonic sensor to measure the distance between the sensor and the follower has an advantage of enabling the step change to be monitored independently of the type or condition of lubricant used to lubricate the engine because the sensor is not sensitive to the type or condition of the lubricant unlike capacitance sensors, for example. Ultrasonic sensors have an advantage over contact sensors in not causing any friction or contact with the follower. Also, ultrasonic sensors are suitable for use in an operating engine environment.

The reference target may suitably comprise physical means, for example an elongated slot machined into the valve train follower. Typical dimensions for the slot may for example be 0.4 mm deep, 2 mm wide and 12 mm long but other suitable dimensions may be machined.

Other suitable reference targets may be provided on the valve train follower whereby a step change may suitably be monitored, for example one or more protuberances.

More than one reference targets may suitably be provided on the follower. In this way, more than one step change may be monitored for more detailed follower rotation measurement.

The ultrasonic sensor is typically one suitable for measuring a step change in the distance between the sensor and the follower which occurs as the target on the follower rotates past the sensor. Preferred sensors for use in the present invention are high frequency eddy current sensors.

A suitable sensor is a Kaman 2U sensor having a measuring range of 0.5 mm, a frequency response of 10 kHz and an operating temperature of up to 105°C. For such sensors to operate, the sensor head should not be more than 0.5 mm away from the target.

The signal from the ultrasonic sensor is suitably analysed to convert it into an output voltage by use of :
(i) a matching signal conditioning unit,
(ii) data acquisition hardware, and
(iii) data acquisition software.

The matching signal conditioning unit is able to overcome or reduce the amount of drift caused by change in temperature and to convert the analogue signal into a TTL signal (low voltage logic signal). Thus, for example, an output signal may be produced which changes from 0 volts to 5 volts and the back to 0 volts as the target rotates past the sensor. Alternatively, for example, an output signal may be produced which changes from 5 volts to 0 volts and the back to 5 volts as the target rotates past the sensor.

A suitable signal conditioning unit is a Kaman KD2440.

The data acquisition hardware suitably comprises a data acquisition card having a high speed timer-counter chip suitable for measuring the TTL digital signal from the matching signal conditioning unit.

A suitable data acquisition card is a National Instruments NI 6601 having four counter/timers, 32 bits and also having a glitch removal function.

The data acquisition software is synchronised to monitor and log the data without compromising the accuracy of the system.

According to the method of the present invention the sensor measures the distance between the sensor and the follow and monitors a step change in the distance between the follower and the sensor as the target rotates past the sensor. The sensor continuously measures the distance from the follower and whenever there is a step change (for example a machined slot) the data acquisition system is triggered for logging the event.

In normal operation, logging is time based wherein typically, the operator specifies the time intervals to log the data, in which case such a method may result in some critical data not being captured. In order to log the data more efficiently, the step change on the follower may also trigger the logging thus capturing the time interval between successive step changes. This time is typically the time between consecutive step changes for a single target thus representing the time to complete one follower rotation.

Thus, according to a preferred aspect of the present invention there is provided a method for the measurement of the rotation of a valve train follower in an internal combustion engine, said method comprising :
(a) providing said valve train follower with a reference target,
(b) providing an ultrasonic sensor for measuring the distance between the sensor and the follower,
(c) monitoring the step change in the distance between the follower and the sensor as the target rotates past the sensor,
(d') providing means for the step change to trigger a matching signal conditioning unit, and
(e') measuring the time between successive signals from the conditioning unit by means of data acquisition hardware and data acquisition software to determine the rotation of said valve train follower.

Also according to the present invention there is provided apparatus for the measurement of the rotation of a valve train follower in an internal combustion engine, said apparatus comprising a valve train follower with a reference target and an ultrasonic sensor for measuring the distance between the sensor and the follower, and further comprising a matching signal conditioning unit, data acquisition hardware and data acquisition software. The apparatus may be used in the method of the present invention.

By use of the present invention, engineers and researchers may be able to study the interaction between the cam and the follower in real time. The present invention may enable the effect of viscosity and/or friction modifiers in the engine lubricant on the follower rotation to be studied.

The present invention is preferably directed to a method and apparatus for measurement of the rotation of valve train followers in an internal combustion engine having an overhead camshaft.

The present invention has the advantage of suitability of operation at high temperature and in the presence of lubricant.

The present invention also provides information with respect to one or more of the following:
1. diagnostic control/engine feedback,
2. determination of appropriate lubricant,
3. indication of any need for lubricant change,
4. prevention of engine wear, and
5. measurement of fuel economy.

The invention will now be illustrated by way of example only and with reference to the following example and Figures 1 to 3 in which Figure 1 is a photograph of part of an engine, Figure 2 is a photograph of a cam follower and Figure 3 represents in graph form, cam follower rotation time plotted against operating time.

### Example

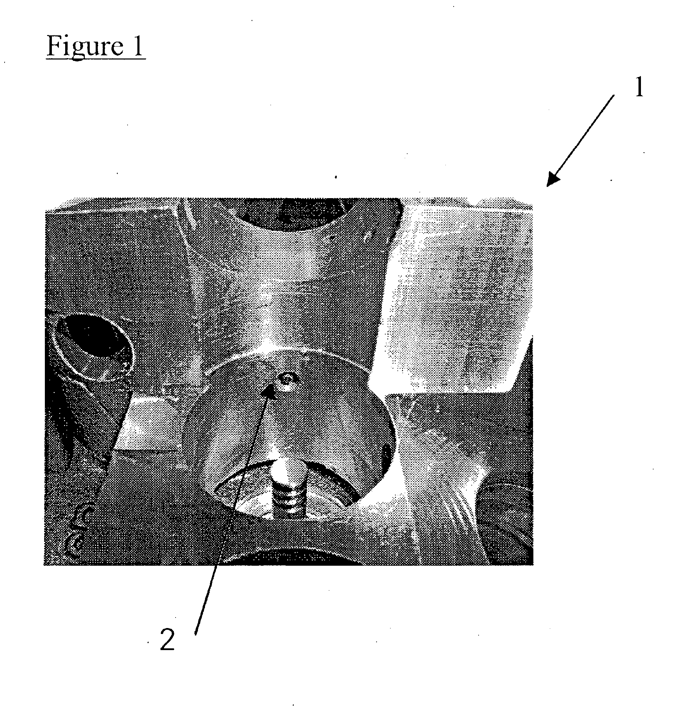

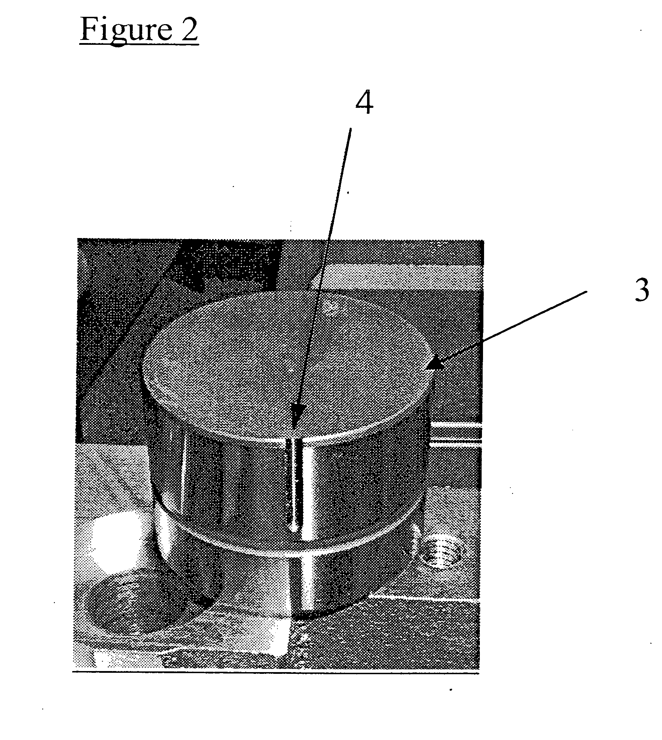

Referring to Figures 1 and 2 an engine (1) is provided with an ultrasonic sensor (2), for example a Kaman 2U sensor which was connected to a Kaman KD2440 signal conditioner (not shown). The valve train follower (3) is provided with a longitudinal slot (4) which is 0.5 mm deep, 2 mm wide and 12 mm long and which in use, acts as a target for the ultrasonic sensor (2). Using this equipment, the time for rotation of the valve train follower was determined using the ultrasonic sensor detecting the event of the target slot on the valve train follower passing the ultrasonic sensor.

Follower rotation measurement was carried out on a Volkswagen TDI engine head. The camshaft speed was 400 rpm, lubricant temperature was 40°C and the lubricant type was SAE 30. The Figure below represents a graph wherein the Y axis shows the time (seconds) to complete one valve train follower rotation and the X axis the date and time the event took place. The time to complete one follower rotation was determined. The graph was produced during a short test run and shows the effect of "running-in" on the follower rotation. The graph clearly shows that in operation, initially there was a rise in follower rotation time, then a gradual decrease in rotation time followed by a downward slope until a point where the rotation speed becomes irregular. The rotation of the follower effects the friction generated between the cam/follower contact and thus can effect fuel economy. The amount of rotation/ no rotation can effect the rate of wear on the cam and the follower. The type and condition of lubricant can change the speed of follower rotation. These can be measured and/or monitored using the method of the present invention.

## Claims

1. A method for the measurement of the rotation of a valve train follower in an internal combustion engine, said method comprising :
(a) providing said valve train follower with a reference target,
(b) providing an ultrasonic sensor for measuring the distance between the sensor and the follower,
(c) monitoring the step change in the distance between the follower and the sensor as the target rotates past the sensor, and
(d) measuring the time between successive step changes to determine the rotation of said valve train follower.

2. A method according to claim 1 which comprises providing said valve train follower with a reference target which comprises an elongated slot machined on the valve train follower.

3. A method according to claim 1 which comprises providing said valve train follower with a reference target which comprises a protuberance on the valve train follower.

4. A method according to any of the preceding claims which comprises providing more than one reference target on the follower.

5. A method according to any of the preceding claims which comprises providing an ultrasonic sensor which comprises a high frequency eddy current sensor.

6. A method according to any one of the preceding claims which comprises providing means for the step change to trigger a matching signal conditioning unit, and measuring the time between successive signals from the conditioning unit by means of data acquisition hardware and data acquisition software to determine the rotation of said valve train follower.

7. An apparatus for apparatus for the measurement of the rotation of a valve train follower in an internal combustion engine, said apparatus comprising a valve train follower with a reference target and an ultrasonic sensor for measuring the distance between the sensor and the follower.

8. Apparatus as claimed in claim 7 further comprising a matching signal conditioning unit, data acquisition hardware and data acquisition software.
